# FASCICULE DE BREVET EUROPEEN

(11) **EP 3 848 154 B1**
(45) Date de publication et mention de la délivrance du brevet: **02.08.2023**
(21) Numéro de dépôt: 21150974.0
(22) Date de dépôt: 11.01.2021
(51) Int. Cl.: B25B 31/00, B21J 15/42, F16B 19/10

(54) **AGRAFE D´ÉPINGLAGE À PINCE ALIGNÉE**
HEFTKLAMMER MIT AUSGERICHTETER KLAMMERZANGE
FASTENING CLIP WITH ALIGNED CLAMP

(30) Priorité: 13.01.2020 FR 2000263
(43) Date de publication de la demande: 14.07.2021
(73) Titulaire: Lisi Aerospace, 75012 Paris (FR)
(72) Inventeur: BRACHET, Julien, 18500 MEHUN SUR YEVRE (FR)
(74) Mandataire: Lavoix

(56) Documents cités:
- EP-A1- 0 336 808
- FR-A1- 3 014 969

## Description

### Domaine technique

La présente invention appartient au domaine des fixations mécaniques, notamment des fixations temporaires dites agrafes d'épinglage, et concerne plus particulièrement une agrafe d'épinglage à écarteur fixe comprenant un ressort pour l'alignement de sa pince avec l'axe longitudinal de son corps principal.

La présente invention trouve une application directe dans l'assemblage de structures, telles que des plaques, dans l'industrie aéronautique par exemple.

### Etat de l'art

Il est d'usage, avant de réaliser la fixation définitive de plaques ou tôles par rivetage par exemple, de procéder à un assemblage temporaire des plaques au moyen d'agrafes d'épinglage traversant des trous en regard pratiqués dans lesdites plaques de sorte à les maintenir en position. Ce procédé d'assemblage est particulièrement utilisé dans la construction aéronautique, notamment lors des opérations de jonctionnement entre les ailes et le fuselage d'un aéronef.

Les agrafes d'assemblage à écarteur fixe, telles que décrites dans le document FR3014969, que montre le préambule de la revendication 1, au nom de la Demanderesse ou dans le document US 2775155, comprennent généralement un corps pourvu d'une face d'appui destinée à venir au contact de la face extérieure d'une des pièces externes d'un assemblage temporaire, une tige débouchant de la face d'appui du corps pour s'engager dans les trous en regard des pièces, un élément allongé expansible tel qu'une pince élastique associé à la tige, traversant les trous des pièces en regard et pourvu à son extrémité libre d'au moins un bec d'accrochage, et un mécanisme de commande destiné à engendrer un déplacement relatif entre ledit élément allongé expansible et le corps.

Ainsi, sous l'action du mécanisme de commande, l'élément allongé expansible recule le long de la tige en s'écartant progressivement, sous l'action d'un écarteur fixe par rapport au corps, jusqu'à ce que la face arrière plane du bec d'accrochage s'applique contre la face extérieure de l'autre pièce externe, en bordure du trou correspondant de celle-ci. Les pièces sont alors fermement pressées les unes contre les autres entre la face d'appui du corps et la face arrière du bec d'accrochage de l'élément allongé expansible.

Bien que ces agrafes d'épinglage soient largement utilisées et donnent satisfaction quant au maintien en position des pièces à serrer, elles présentent certains inconvénients.

En effet, les agrafes existantes présentent un problème de désalignement des pinces avec l'axe du corps compliquant ainsi leur insertion dans les structures à assembler et/ou leur retrait. De plus les agrafes existantes ont des diamètres assez grands qui rendent leur utilisation délicate lorsque plusieurs agrafes doivent être insérées dans des perçages rapprochés.

### Présentation de l'invention

La présente invention vise à pallier les inconvénients de l'art antérieur, notamment le problème de désalignement des pinces par rapport au corps de l'agrafe.

À cet effet, la présente invention concerne une agrafe d'épinglage, pour l'assemblage temporaire d'au moins deux pièces structurales percées, comportant un corps principal tubulaire s'étendant suivant un axe longitudinal X et présentant une face d'appui destinée à venir au contact d'une première face des pièces structurales, une pince élastique apte à traverser des perçages en regard, réalisés dans lesdites pièces, la pince étant mobile en translation suivant l'axe longitudinal, entrainée par la rotation autour dudit axe d'un tirant pourvu d'un alésage taraudé coopérant avec une extrémité filetée de ladite pince, la pince comprenant deux branches se terminant chacune par un bec d'accrochage destiné à venir au contact d'une dernière face des pièces structurales, lesdites branches s'écartant transversalement et progressivement le long d'un écarteur, placé entre lesdites branches et fixe par rapport au corps principal, sous l'effet du recul de la pince. L'agrafe selon l'invention est remarquable en ce qu'elle comporte un ressort de compression placé à l'intérieur du corps principal et maintenant l'extrémité filetée engagée partiellement dans l'alésage taraudé, en exerçant un effort selon l'axe longitudinal X tendant à repousser l'extrémité filetée vers l'extrémité du corps principal opposée à la face d'appui, de sorte que la pince reste constamment alignée avec l'axe longitudinal.

Selon un mode de réalisation avantageux, l'extrémité filetée présente un bord annulaire contre lequel s'exerce le ressort.

Plus particulièrement, une rondelle d'appui est intercalée entre le bord annulaire et le ressort.

Avantageusement, la face d'appui correspond à une surface annulaire sensiblement plane d'une collerette s'emboitant par clipsage dans le corps principal.

Selon un mode de réalisation l'agrafe comporte en outre une pièce centrale placée à l'intérieur du corps principal, perpendiculairement à l'axe longitudinal X, et bloquée en rotation et en translation par rapport audit corps, la pièce centrale recevant dans une rainure une extrémité transverse de l'écarteur, l'écarteur présentant une forme en T.

Plus particulièrement, le ressort de compression est placé contraint entre la pièce centrale et le bord annulaire de l'extrémité filetée ou la rondelle.

Selon un mode de réalisation, le corps principal comprend à l'une de ses extrémités, destinée à venir au contact des pièces à assembler, un logement apte à bloquer en translation et en rotation au moins une collerette s'emboitant par clipsage dans le corps principal.

Plus particulièrement, le logement comporte au moins une encoche s'étendant parallèlement à l'axe longitudinal X, une base de ladite encoche s'étendant perpendiculairement à l'axe longitudinal X.

Selon un mode de réalisation, la pièce centrale présente une forme polygonale régulière dont chaque coin est inséré dans une encoche du logement, ladite pièce centrale venant en butée contre des bases des encoches.

Avantageusement, le tirant est monté dans le corps principal par une liaison pivot d'axe X, ledit tirant étant bloqué en translation dans le corps principal.

Dans l'agrafe selon l'invention, l'extrémité filetée reste contrainte par le ressort tant qu'elle n'est pas totalement rentrée dans l'alésage taraudé du tirant.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'une agrafe d'épinglage conforme aux principes de l'invention.

### Présentation des dessins

Les différentes figures et les éléments d'une même figure ne sont pas nécessairement à l'échelle. Sur l'ensemble des figures, les éléments identiques ou équivalents portent la même référence numérique.

Il est ainsi illustré en :
Fig. 1 : une vue de dessus d'une agrafe d'épinglage selon l'invention, dans une première configuration ;
Fig. 2 : une vue de côté de l'agrafe de la figure 1 dans une seconde configuration ;
Fig. 3 : une coupe de l'agrafe de la figure 1, en position initiale dans un assemblage de pièces ;
Fig. 4 : une vue en perspective du corps principal d'une agrafe d'épinglage selon l'invention ;
Fig. 5 : une vue en perspective de la pièce centrale d'une agrafe d'épinglage selon l'invention ;
Fig. 6 : l'écarteur en forme de T d'une agrafe d'épinglage selon l'invention ;
Fig. 7 : une vue de face de l'écarteur monté dans la pièce centrale ;
Fig. 8A : une vue schématique d'une agrafe d'épinglage en position initiale de serrage minimum ;
Fig. 8B : une vue schématique de l'agrafe de la figure 8A en position finale de serrage maximum ;
Fig. 9A : une agrafe d'épinglage selon l'invention dans une première position de serrage ;
Fig. 9B : une agrafe d'épinglage selon l'invention dans une deuxième position de serrage ;
Fig. 9C : une agrafe d'épinglage selon l'invention dans une troisième position de serrage ;
Fig. 10 : une vue de dessus de deux agrafes l'une derrière l'autre, la pince d'une agrafe s'engageant dans l'empreinte de l'autre ;
Fig. 11 : une coupe des agrafes de la figure 10.

### Description détaillée de modes de réalisation

Dans le mode de réalisation décrit ci-après, on fait référence à une agrafe d'épinglage destinée principalement à l'assemblage temporaire d'au moins deux pièces percées, de type plaques, dans l'industrie aéronautique et spatiale. Cet exemple non limitatif est donné pour une meilleure compréhension de l'invention et n'exclut pas son utilisation sur d'autres types de structures dans des industries connexes telles que l'industrie automobile.

Dans la suite de la description, le terme « agrafe » est employé pour désigner une agrafe d'épinglage pour l'assemblage temporaire de structures percées.

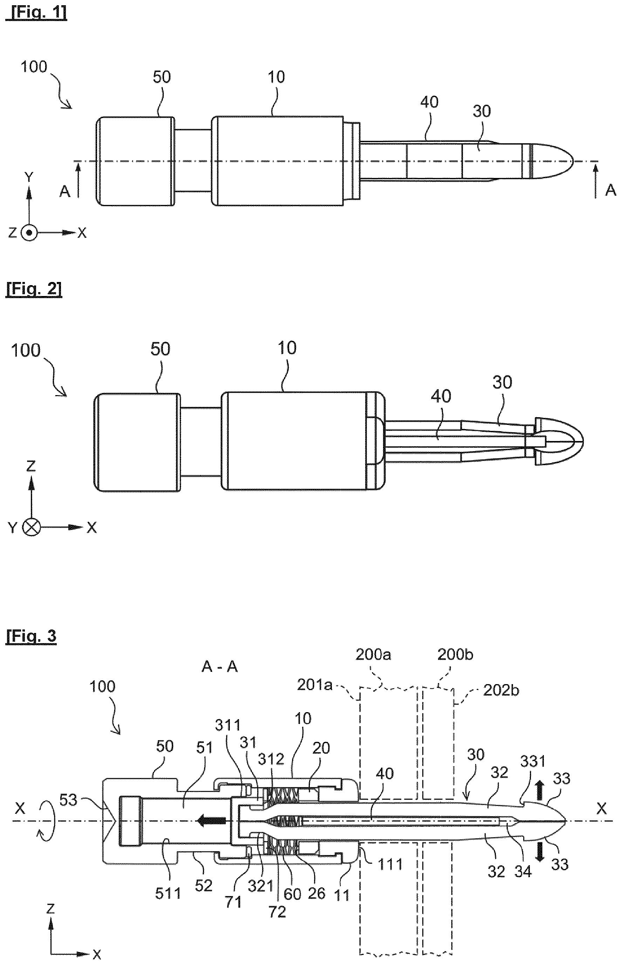

La figure 3 représente en vue de coupe une agrafe 100 comportant un corps principal 10, dans lequel s'opère une majeure partie du mécanisme d'actionnement de l'agrafe, une pièce centrale 20, insérée coaxialement à l'intérieur du corps principal et bloquée en rotation par rapport à celui-ci, une pince 30, traversant la pièce centrale et s'étendant à l'extérieur du corps principal suivant son axe longitudinal X, un écarteur 40, fixe par rapport au corps principal et permettant d'ouvrir la pince lorsqu'on actionne le mécanisme de l'agrafe, un tirant 50, actionnant ledit mécanisme par une rotation autour de l'axe longitudinal du corps principal, et un ressort 60, placé à l'intérieur du corps principal et assurant un alignement permanent de la pince 30 avec l'axe longitudinal dudit corps comme expliqué plus loin.

L'agrafe 100 permet d'assembler temporairement au moins deux pièces percées 200a et 200b, en les appuyant fermement l'une contre l'autre, par la compression desdites pièces entre le corps principal 10 et la pince 30, ladite pince traversant des trous en vis-à-vis réalisés dans lesdites pièces. L'effort de compression résultant est commandé par le serrage de l'agrafe.

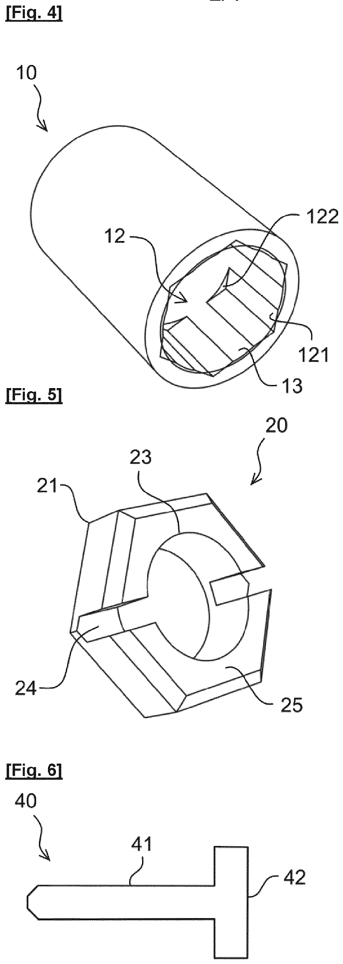

Le corps principal 10, en référence à la figure 4, est tubulaire, présente une forme globalement cylindrique à base circulaire et comporte à l'une de ses extrémités, dite « extrémité avant » car destinée à venir au contact des pièces à assembler, une collerette 11 fixée dans un logement 12 dudit corps, ledit logement étant conformé pour recevoir également la pièce centrale 20 et la bloquer en rotation. Le logement 12 comporte à cet effet une forme apte à bloquer en translation et en rotation la collerette 11 et la pièce centrale 20. Ainsi, dans l'exemple de la figure 4, le logement 12 comprend des encoches 121 périphériques usinées dans l'alésage 13 du corps, de forme prismatique et présentant chacune une base 122 définie par le retrait de matière sur l'alésage. En outre, chaque encoche 121 présente un axe sensiblement parallèle à l'axe longitudinal X du corps principal 10. De ce fait, les encoches 121 permettent de guider en translation la collerette 11 et la pièce centrale 20 lors de leurs insertions dans le logement 12 du corps principal 10, tout en permettant l'insertion des autres éléments de l'agrafe dans le corps principal 10, par l'extrémité avant. Le logement 12 peut présenter d'autres formes permettant de bloquer en rotation la collerette 11 et la pièce centrale 20, au moyen de lobes ou de cannelures, en creux ou en saillie par rapport à l'alésage du corps principal. Le blocage en translation peut être réalisé par exemple par une paroi s'étendant perpendiculairement à l'axe longitudinal X, ponctuellement répartie ou sous la forme d'un épaulement continu, ou par l'ajout d'un élément élastique engagé élastiquement dans une gorge réalisée dans l'alésage du corps principal, et s'étendant radialement vers l'intérieur sur une distance suffisante pour faire obstacle à la pièce centrale 20 et assurer son blocage en translation.

La pièce centrale 20 se retrouve également immobilisée en translation suivant l'axe X, en butée contre les bases 122 des encoches 121 et une face arrière de la collerette 11.

La collerette 11 peut par exemple être emboitée par clipsage ou encliquetage à l'extrémité du corps principal 10, et définit une face d'appui 111 annulaire et de préférence plane, pour améliorer le contact avec les pièces à assembler.

La pièce centrale 20, en référence à la figure 5, présente une forme en plan polygonale, de préférence régulière, dont le nombre de sommets 21, matérialisés par des coins, correspond au nombre d'encoches 121 du logement 12 ménagé dans le corps principal 10. Ainsi, chaque coin 21 vient reposer sur la base 122 d'une encoche 121 de sorte à réaliser un emboitement entre la pièce centrale 20 et le corps principal 10. Ce montage permet un blocage en rotation de la pièce centrale 20 par rapport au corps principal 10, avec une stabilité améliorée tout en limitant l'usure des surfaces en contact, contrairement à un blocage sur alésage lisse sans encoches.

Dans l'exemple de réalisation illustré, la pièce centrale 20 présente une forme externe hexagonale régulière et comprend un trou traversant 23 permettant le passage de la pince 30.

La pièce centrale 20 comporte en outre une rainure diamétrale 24 qui permet d'immobiliser en rotation l'écarteur 40, ledit écarteur présentant une forme en T. La rainure 24 est réalisée sur une face avant 25 de la pièce centrale 20 et s'étend perpendiculairement à l'axe longitudinal X. La pièce centrale 20 présente également une face d'appui 26 opposée à la face avant 25.

La pince 30, selon l'exemple de réalisation illustré, est de nature élastique et comporte une extrémité filetée 31 placée initialement à l'intérieur du corps principal 10, deux branches 32 dont chacune se termine par une extrémité arrondie 33 en saillie, les deux extrémités arrondies 33 formant un bec d'accrochage, ci-après référencé 33.

L'extrémité filetée 31, représentée en coupe sur la figure 3, est de forme cylindrique creuse, ouverte à une extrémité et fermée par un fond à l'extrémité opposée, et comporte un filetage 311 sur sa surface latérale extérieure. L'extrémité ouverte définit un bord annulaire 312, sur lequel repose une rondelle 72. La rondelle 72 présente un diamètre extérieur inférieur au diamètre intérieur du corps principal 10, et un diamètre intérieur suffisant pour permettre le passage des branches 32 de la pince 30. La rondelle 72 est ainsi apte à coulisser dans le corps 10.

L'extrémité filetée 31 maintient les deux branches 32 de sorte qu'elles soient encastrées au niveau du fond et libres élastiquement au niveau de l'ouverture de ladite extrémité filetée. À ce dernier effet, chaque branche 32 de la pince 30 présente une concavité locale 321 en regard de la paroi latérale de l'extrémité filetée 31 de sorte à définir un espacement entre ladite paroi et les branches 32 au repos, permettant une mobilité desdites branches lors de leur écartement.

Chaque branche 32 de la pince 30 est rebroussée à partir de sa concavité locale 321 et s'étend, suivant l'axe X du corps principal 10, jusqu'au bec d'accrochage 33.

Le bec d'accrochage 33, comme souligné plus haut, est constitué des deux extrémités arrondies des branches 32, chacune desdites extrémités présente une face plane, les deux faces planes sont appliquées l'une contre l'autre lorsque la pince 30 est fermée (position au repos), et espacées lorsque la pince est ouverte (position contrainte). Le bec d'accrochage 33 présente une surface d'accrochage 331 au niveau de sa jonction avec les branches 32, ladite surface est destinée à venir au contact des pièces à assembler lorsque l'agrafe 100 est suffisamment serrée. Cette surface d'accrochage 331 est annulaire et, de préférence, plane pour ne pas abîmer les surfaces au contact.

Les deux branches 32 de la pince 30 sont espacées, aussi bien au repos qu'en contrainte, et définissent une fente 34 dans laquelle est placé l'écarteur 40.

L'écarteur 40, en référence à la figure 6, est une tige en forme de T comportant une partie longitudinale 41 et une partie transverse 42. La partie longitudinale 41 présente une longueur inférieure à la longueur des branches 32 de la pince 30 et est disposée dans la fente 34 entre lesdites branches. La partie transverse 42 est quant à elle placée dans la rainure diamétrale 24 de la pièce centrale 20 de sorte qu'elle soit bloquée en rotation, à un jeu fonctionnel prés, par rapport à ladite pièce et, par là-même, par rapport au corps principal 10.

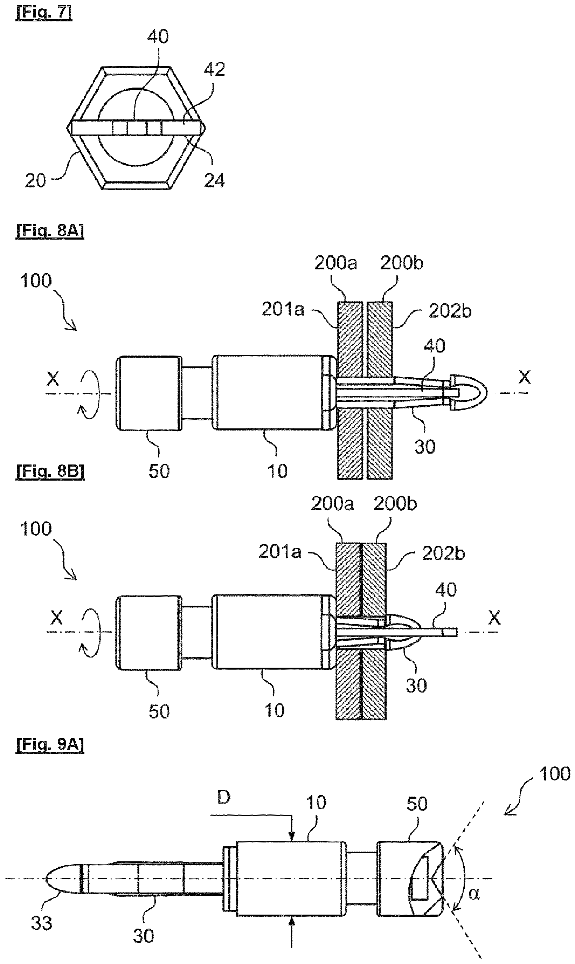

La figure 7 représente en vue de face l'écarteur 40 en place dans la pièce centrale 20, la partie transverse 42 étant introduite dans la rainure diamétrale 24.

L'écarteur 40, fixe par rapport au corps principal 10, permet d'ouvrir la pince 30 en écartant les branches 32 l'une de l'autre sous l'effet d'un déplacement, plus précisément d'un retrait, de ladite pince par rapport au corps principal. Ce déplacement est produit par l'actionnement du tirant 50 qui constitue l'organe de commande de l'agrafe 100.

Le tirant 50, selon l'exemple de réalisation illustré, présente une forme globalement cylindrique à section circulaire de diamètre variable, le diamètre étant plus grand au niveau de l'extrémité libre du tirant, qui correspond à une zone de prise manuelle par l'utilisateur, afin de réduire l'effort de serrage nécessaire ou tout du moins de pré serrage avant emploi d'outils. Cette section variable définit une gorge 52 en amont du corps principal 10, entre l'extrémité libre du tirant et son extrémité opposée bloquée en translation à l'intérieur dudit corps. En effet, le tirant 50 est monté, dans le corps principal 10, libre en rotation autour de l'axe longitudinal X dudit corps tout en étant bloqué en translation entre une butée 71 et des rebords du corps principal 10 qui viennent accrocher un épaulement de la gorge 52. Ainsi le tirant 50 et le corps principal 10 sont montés en liaison pivot d'axe X. Le tirant présente une longueur hors du corps principal constante, ce qui accélère l'installation d'une pluralité d'agrafes sur une structure ou une grille de perçage par un robot, ce dernier n'ayant pas à identifier d'éventuels obstacles ni à modifier son parcours pour les éviter. En outre, la butée 71 peut avantageusement constituer un organe de glissement pour faciliter la rotation du tirant 50 dans le corps principal 10.

Le tirant 50 comporte principalement un alésage taraudé 51 pourvu d'un filetage interne 511 pour coopérer avec l'extrémité filetée 31 de la pince 30. En effet, la rotation du tirant 50 produit un vissage ou un dévissage, selon le sens de ladite rotation, de la pince 30 dans l'alésage 51 dudit tirant. De plus l'extrémité filetée 31 de la pince 30 est maintenue engagée dans l'alésage 51 au moyen du ressort 60, placé autour des branches 32 entre la pièce centrale 20 et le bord annulaire 312 de ladite extrémité filetée comme représenté sur la figure 3.

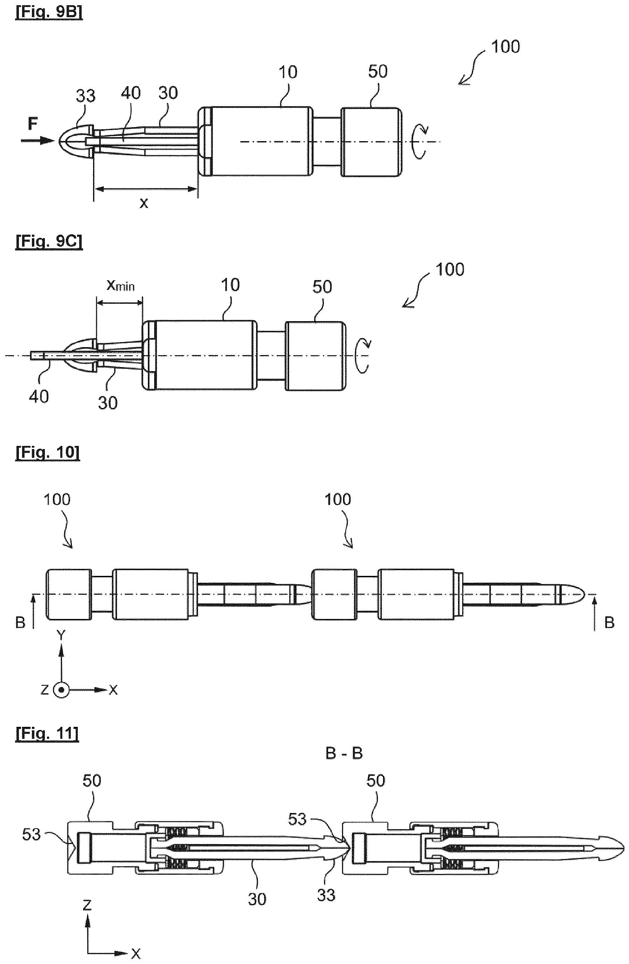

Le tirant 50 comporte à son extrémité fermée une empreinte 53 adaptée pour recevoir la pince d'une autre agrafe. En effet, lorsque plusieurs agrafes sont acheminées par un tuyau les unes derrière les autres, comme illustré sur les figures 10 et 11, l'empreinte 53 permet de centrer les agrafes dans le tuyau.

Selon l'exemple de réalisation illustré, l'empreinte est un cône d'angle α, par exemple 120°, et d'axe sensiblement confondu avec l'axe longitudinal X de l'agrafe. La forme de l'empreinte peut varier pour s'adapter à d'autres formes de pinces.

Le ressort 60 est disposé dans le corps principal 10 entre la pièce centrale 20 et la rondelle 72. Le ressort 60 est avantageusement un ressort de compression exerçant en permanence un effort selon l'axe longitudinal X tendant à repousser la pince 30, via son extrémité filetée 31, dans le sens du retrait, à savoir vers l'alésage 51 du tirant 50, lorsque ladite extrémité n'est pas totalement introduite dans ledit alésage. Cet effort a également l'avantage de centrer et d'engager l'extrémité filetée 31 à l'entrée de l'alésage taraudé 51. Cela a pour effet de préserver avantageusement un alignement sensiblement constant de la pince 30 dans l'agrafe 100, comparée à une agrafe de l'art antérieur qui ne possède aucun moyen de rappel s'exerçant sur l'extrémité filetée 31. Plus précisément, l'axe longitudinal de la pince 30 et l'axe longitudinal X du corps principal 10 restent sensiblement confondus, facilitant ainsi l'insertion et le retrait de l'agrafe 100 dans les trous des structures à assembler.

Il convient de noter que le problème de désalignement de la pince concerne surtout les pinces dites « plates », par opposition aux pinces cylindriques, lorsqu'elles sont introduites dans des trous de fixation circulaires. La pince 30, selon le mode de réalisation illustré, est de type « plate » et les figures 1 et 2 permettent de visualiser sa forme dans deux plans orthogonaux.

De ce fait, l'effet d'alignement obtenu par le ressort est plus notable dans le cas de pinces « plates ».

Le fait que le ressort de compression 60 maintienne l'extrémité filetée 31 en pression sur les filets de l'alésage taraudé 51 garantit également une prise facilitée entre les filets lors du vissage.

L'agrafe 100 telle que décrite, en référence à la figure 3, permet d'assembler provisoirement les deux pièces 200a et 200b, qui peuvent par ailleurs être d'épaisseurs différentes, en vue de leur fixation définitive par rivetage par exemple. L'agrafe 100 peut également être utilisée dans le cas d'une pluralité de pièces à assembler.

Pour ce faire, en référence aux figures 1 et 8A, la pince 30 est initialement introduite dans les perçages desdites pièces, qui sont alors positionnés en vis-à-vis, l'agrafe étant en position de serrage minimum avec la pince en position fermée. Toujours en position de serrage minimum, l'agrafe 100 est introduite dans les pièces par le biais de sa pince 30 jusqu'à ce que la face d'appui 111 de la collerette 11 du corps principal 10 vienne au contact d'une face avant 201a de la première pièce 200a.

Ensuite, en référence à la figure 8B, l'agrafe 100 est serrée progressivement par la mise en rotation du tirant 50, mobile en rotation par rapport au corps principal 10, pour ramener le bec d'accrochage 33 de la pince 30 en appui contre une face arrière 202b de la deuxième pièce 200b. En effet, comme expliqué plus haut, la rotation du tirant 50 produit une translation de la pince 30 suivant la direction longitudinale X, due à la coopération entre l'alésage taraudé 51 et l'extrémité filetée 31 initialement engagée dans ledit alésage. Le déplacement de la pince 30 correspond ainsi à son retrait partiel à l'intérieur du tirant 50. Le serrage de l'agrafe 100 est alors poursuivi jusqu'à obtenir une position de serrage maximum qui correspond à une compression ferme des pièces 200a et 200b entre le corps principal 10 et le bec d'accrochage 33. Dans cette position, le bec d'accrochage 33 est au contact de la face arrière 202b de la deuxième pièce 200b par sa surface d'accrochage 331.

L'accrochage de la face arrière 202b, ou plus précisément de la paroi du perçage de ladite face, de la deuxième pièce 200b par le bec d'accrochage 33 de la pince 30 est rendu possible par l'ouverture de ladite pince au fur et à mesure du serrage de l'agrafe, cette ouverture se traduisant par un écartement des branches 32 de sorte que la largeur du bec 33 au niveau de sa surface d'accrochage 331 soit supérieure au diamètre du perçage de la deuxième pièce 200b dans lequel l'agrafe est introduite.

En effet, le déplacement de la pince 30 et, par là-même de ses branches 32, dans le sens allant du corps principal 10 au tirant 50 provoque un écartement des branches 32 sur l'écarteur 40, ce dernier restant fixe par rapport au corps principal 10.

Le profil des branches 32, et notamment le profil intérieur au contact de l'écarteur 40, présente une forme adaptée pour que lesdites branches commencent à s'écarter l'une de l'autre dès le début du serrage de l'agrafe 100. Dans l'exemple illustré en figure 3, en position fermée de la pince 30, la partie de la fente 34 en amont du bec 33 non occupée par l'écarteur 40 présente une épaisseur décroissante à partir de l'extrémité dudit écarteur, de sorte que la pénétration de l'écarteur dans cette partie de plus faible épaisseur entraine l'écartement des branches 32.

L'écartement des branches 32 de la pince 30 peut se poursuivre jusqu'à ce que l'écarteur 40 traverse le bec d'accrochage 33 comme représenté sur la figure 8B.

Ainsi, l'effort exercé par le bec d'accrochage, alors au contact de la paroi du trou de la pièce arrière de l'assemblage, entraine celle-ci contre les autres pièces, dont la pièce avant externe est en butée contre la face d'appui du corps principal. Les pièces sont par conséquent fermement pressées.

Les figures 9A à 9C illustrent l'agrafe 100 dans des positions de serrage successives, dans lesquelles la course x de la pince 30 décroit progressivement au fur et à mesure du serrage pour atteindre la course minimum xₘᵢₙ correspondant à la plus faible épaisseur totale d'un assemblage pour lequel l'agrafe 100 peut être utilisée.

De préférence, l'agrafe 100 présente un plus grand diamètre D, par exemple au niveau de son corps principal 10, égal à 10,5 millimètres à des tolérances métriques près. Cet encombrement limité permet de monter plusieurs agrafes rapprochées dans un même assemblage et de faciliter également l'accès par des moyens tels que des modules de pose robotisés.

Au vu de la présente description, certains éléments de l'invention peuvent être réalisés différemment ou remplacés par des d'autres éléments équivalents sans sortir du cadre de l'invention, celle-ci n'étant pas limitée au seul exemple décrit et illustré. Par exemple, la rondelle 72 peut être fixée à l'extrémité filetée 31, ou l'extrémité filetée 31 peut être munie d'une collerette sur laquelle le ressort 60 prend appui pour repousser la pince 30 vers le tirant et la maintenir coaxiale avec le corps principal 10.

## Revendications

1. Agrafe d'épinglage (100), pour l'assemblage temporaire d'au moins deux pièces structurales (200a, 200b) percées, comportant un corps principal (10) tubulaire s'étendant suivant un axe longitudinal X et présentant une face d'appui (111) destinée à venir au contact d'une première face (201a) des pièces structurales, une pince (30) élastique apte à traverser des perçages en regard, réalisés dans lesdites pièces, la pince étant mobile en translation suivant l'axe longitudinal, entrainée par la rotation autour dudit axe d'un tirant (50) pourvu d'un alésage taraudé (51) coopérant avec une extrémité filetée (31) de ladite pince, la pince (30) comprenant deux branches (32) se terminant chacune par un bec d'accrochage (33) destiné à venir au contact d'une dernière face (202b) des pièces structurales, lesdites branches s'écartant transversalement et progressivement le long d'un écarteur (40), placé entre lesdites branches et fixe par rapport au corps principal (10), sous l'effet du recul de la pince,
**caractérisée en ce qu'**elle comporte un ressort (60) de compression placé à l'intérieur du corps principal (10) et maintenant l'extrémité filetée (31) engagée partiellement dans l'alésage taraudé (51) de sorte que la pince (30) reste constamment alignée avec l'axe longitudinal.

2. Agrafe selon la revendication 1, dans laquelle l'extrémité filetée (31) présente un bord annulaire (312) contre lequel s'exerce le ressort (60).

3. Agrafe selon la revendication 2, dans laquelle une rondelle (72) d'appui est intercalée entre le bord annulaire (312) et le ressort (60).

4. Agrafe selon l'une quelconque des revendications précédentes, dans laquelle la face d'appui (111) correspond à une surface annulaire sensiblement plane d'une collerette (11) s'emboitant par clipsage dans le corps principal (10).

5. Agrafe selon l'une quelconque des revendications précédentes, comportant en outre une pièce centrale (20) placée à l'intérieur du corps principal (10), perpendiculairement à l'axe longitudinal X, et bloquée en rotation et en translation par rapport audit corps, la pièce centrale recevant dans une rainure (24) une extrémité transverse (42) de l'écarteur (40), l'écarteur présentant une forme en T.

6. Agrafe selon la revendication 5 prise en combinaison avec la revendication 2 ou 3, dans laquelle le ressort (60) de compression est placé contraint entre la pièce centrale (20) et le bord annulaire (312) de l'extrémité filetée (31) ou la rondelle (72).

7. Agrafe selon l'une quelconque des revendications précédentes, dans laquelle le corps principal (10) comprend à l'une de ses extrémités, destinée à venir au contact des pièces à assembler, un logement (12) apte à bloquer en translation et en rotation au moins une collerette (11) s'emboitant par clipsage dans le corps principal (10).

8. Agrafe selon la revendication 7, dans laquelle le logement (12) comporte au moins une encoche (121) s'étendant parallèlement à l'axe longitudinal X, une base (122) de ladite encoche s'étendant perpendiculairement à l'axe longitudinal X.

9. Agrafe selon la revendication 8 en combinaison avec la revendication 5, dans laquelle la pièce centrale (20) présente une forme polygonale régulière dont chaque coin (21) est inséré dans une encoche (121) du logement (12), ladite pièce centrale venant en butée contre des bases (122) des encoches.

10. Agrafe selon l'une quelconque des revendications précédentes, dans laquelle le tirant (50) est monté dans le corps principal (10) par une liaison pivot d'axe X, ledit tirant étant bloqué en translation dans le corps principal.

11. Agrafe selon l'une quelconque des revendications précédentes, dans laquelle l'extrémité filetée (31) reste contrainte par le ressort (60) tant qu'elle n'est pas totalement rentrée dans l'alésage taraudé (51) du tirant (50).

## Patentansprüche

1. Befestigungsklammer (100) zur vorübergehenden Verbindung von mindestens zwei gebohrten Strukturteilen (200a, 200b), umfassend einen rohrförmigen Hauptkörper (10), der sich entlang einer Längsachse X erstreckt und eine Auflagefläche (111), die dazu bestimmt ist, um mit einer ersten Seite (201a) der Strukturteile in Kontakt zu kommen, eine elastische Klemme (30), die geeignet ist, gegenüberliegende Bohrungen zu durchqueren, die in den Teilen ausgeführt sind, wobei die Klemme entlang der Längsachse translatorisch, angetrieben durch die Drehung einer Zugstange (50), die mit einer Gewindebohrung (51) versehen ist, die mit einem Gewindeende (31) der genannten Zange zusammenwirkt, um die genannte Achse beweglich ist, die Klemme (30) umfassend zwei Schenkel (32), die jeweils in einer Einhängenase (33) enden, die dazu bestimmt ist, mit einer letzten Seite (202b) der Strukturteile in Kontakt zu kommen, wobei sich die Schenkel unter der Rückstellwirkung der Klemme quer und progressiv entlang eines Abstandhalters (40) spreizen, der zwischen den Schenkeln angeordnet und in Bezug auf den Hauptkörper (10) feststehend ist,
**dadurch gekennzeichnet, dass** sie eine Druckfeder (60) umfasst, die im Inneren des Hauptkörpers (10) angeordnet ist und das Gewindeende (31) hält, das teilweise in die Gewindebohrung (51) eingreift, sodass die Klemme (30) ständig mit der Längsachse ausgerichtet bleibt.

2. Klammer nach Anspruch 1, wobei das Gewindeende (31) einen ringförmigen Rand (312) aufweist, an dem die Feder (60) anliegt.

3. Klammer nach Anspruch 2, wobei zwischen dem ringförmigen Rand (312) und der Feder (60) eine Auflagescheibe (72) eingefügt ist.

4. Klammer nach einem der vorherigen Ansprüche, bei der die Auflagefläche (111) einer im Wesentlichen ebenen Ringfläche eines Flanschs (11) entspricht, der durch Einklipsen in den Hauptkörper (10) eingefügt ist.

5. Klammer nach einem der vorherigen Ansprüche, ferner umfassend ein Mittelstück (20), das innerhalb des Hauptkörpers (10) senkrecht zu der Längsachse X angeordnet und in Bezug auf den Hauptkörper gegen Drehung und Translation arretiert ist, wobei das Mittelstück in einer Nut (24) ein Querende (42) des Abstandhalters (40) aufnimmt, wobei der Abstandhalter eine T-Form aufweist.

6. Klammer nach Anspruch 5 in Verbindung mit Anspruch 2 oder 3, wobei die Druckfeder (60) zwischen dem Mittelstück (20) und dem ringförmigen Rand (312) des Gewindeendes (31) oder der Unterlegscheibe (72) verklemmt angeordnet ist.

7. Klammer nach einem der vorherigen Ansprüche, wobei der Hauptkörper (10) an einem seiner Enden, das dazu bestimmt ist, mit den zusammenzufügenden Teilen in Kontakt zu kommen, eine Aufnahme (12) umfasst, die geeignet ist, um mindestens einen Bund (11), der durch Einklipsen in den Hauptkörper (10) eingefügt ist, in Translation und Drehung zu blockieren.

8. Klammer nach Anspruch 7, wobei die Aufnahme (12) mindestens eine Kerbe (121) umfasst, die sich parallel zu der Längsachse X erstreckt, wobei sich eine Basis (122) der Kerbe senkrecht zu der Längsachse X erstreckt.

9. Klammer nach Anspruch 8 in Verbindung mit Anspruch 5, wobei das Mittelstück (20) eine regelmäßige polygonale Form aufweist, bei der jede Ecke (21) in eine Kerbe (121) des Gehäuses (12) eingesetzt ist, wobei das Mittelstück an Böden (122) der Kerben anstößt.

10. Klammer nach einem der vorherigen Ansprüche, wobei die Zugstange (50) in dem Hauptkörper (10) durch eine Schwenkverbindung mit der Achse X montiert ist, wobei die Zugstange in dem Hauptkörper gegen Translation arretiert ist.

11. Klammer nach einem der vorherigen Ansprüche, wobei das Gewindeende (31) durch die Feder (60) gespannt bleibt, solange es nicht vollständig in die Gewindebohrung (51) der Zugstange (50) eingezogen ist.

## Claims

1. Pinning staple (100) for temporarily assembling at least two drilled structural parts (200a, 200b), comprising a tubular main body (10) extending along a longitudinal axis X and having a bearing face (111) intended to come into contact with a first face (201a) of the structural parts, a resilient clamp (30) able to pass through facing holes made in the said parts, the clamp being able to move in translation along the longitudinal axis, driven by the rotation about said axis of a tie rod (50) provided with a threaded bore (51) cooperating with a threaded end (31) of said clamp, the clamp (30) comprising two arms (32) each ending in a hooking nose (33) intended to come into contact with a last face (202b) of the structural parts, the said arms moving apart transversely and progressively along a spacer (40), placed between the said arms and fixed with respect to the main body (10), under the effect of the backward movement of the clamp,
**characterised in that** it comprises a compression spring (60) placed inside the main body (10) and holding the threaded end (31) partially engaged in the tapped bore (51) so that the clamp (30) remains constantly aligned with the longitudinal axis.

2. Staple according to claim 1, in which the threaded end (31) has an annular edge (312) against which the spring (60) bears.

3. Staple according to claim 2, in which a support washer (72) is interposed between the annular edge (312) and the spring (60).

4. Staple according to any one of the preceding claims, in which the bearing face (111) corresponds to a substantially flat annular surface of a collar (11) fitting by clipping into the main body (10).

5. Staple according to any one of the preceding claims, further comprising a central part (20) placed inside the main body (10), perpendicularly to the longitudinal axis X, and locked in rotation and translation with respect to the said body, the central part receiving in a groove (24) a transverse end (42) of the spacer (40), the spacer having a T shape.

6. Staple according to claim 5 taken in combination with claim 2 or 3, wherein the compression spring (60) is placed constrained between the centre piece (20) and the annular edge (312) of the threaded end (31) or the washer (72).

7. Staple according to any one of the preceding claims, in which the main body (10) comprises at one of its ends, intended to come into contact with the parts to be assembled, a housing (12) capable of locking in translation and in rotation at least one collar (11) fitting by clipping into the main body (10).

8. Staple according to claim 7, wherein the housing (12) comprises at least one notch (121) extending parallel to the longitudinal axis X, a base (122) of said notch extending perpendicularly to the longitudinal axis X.

9. Staple according to claim 8 in combination with claim 5, in which the central piece (20) has a regular polygonal shape, each corner (21) of which is inserted into a notch (121) of the housing (12), said central piece coming into abutment against bases (122) of the notches.

10. Staple according to any one of the preceding claims, in which the tie rod (50) is mounted in the main body (10) by a pivot connection of axis X, said tie rod being locked against translation in the main body.

11. Staple according to any one of the preceding claims, in which the threaded end (31) remains constrained by the spring (60) until it is fully retracted into the threaded bore (51) of the tie rod (50).
